# EUROPÄISCHE PATENTSCHRIFT

(11) **EP 3 781 006 B1**
(45) Veröffentlichungstag und Bekanntmachung des Hinweises auf die Patenterteilung: **16.08.2023**
(21) Anmeldenummer: 19719802.1
(22) Anmeldetag: 18.04.2019
(51) Int. Cl.: A47K 3/40, E03F 5/04

(54) **EINSTELLBARER BODENAUFBAU FÜR SANITÄRE EINRICHTUNGEN**
ADJUSTABLE GROUND STRUCTURE FOR SANITARY FACILITIES
STRUCTURE DE PLANCHER RÉGLABLE POUR INSTALLATIONS SANITAIRES

(30) Priorität: 19.04.2018 DE 102018109400
(43) Veröffentlichungstag der Anmeldung: 24.02.2021
(73) Patentinhaber: Boissonneault, John Brian, 25160 Oye et Pallet (FR)
(72) Erfinder: Boissonneault, John Brian, 25160 Oye et Pallet (FR)
(74) Vertreter: Valvoda, Jakob
(86) Internationale Anmeldenummer: PCT/EP2019/060119
(87) Internationale Veröffentlichungsnummer: WO 2019/202088

(56) Entgegenhaltungen:
- EP-A1- 2 333 171
- DE-A1-102013 113 765
- DE-U1-202008 003 050
- DE-U1-202010 000 963

## Beschreibung

### TECHNISCHES GEBIET

Die Erfindung betrifft einen Bodenaufbau für sanitäre Einrichtungen, eine sanitäre Einrichtung und ein Verfahren zur Montage eines Bodenaufbaus für sanitäre Einrichtungen oder einer sanitären Einrichtung. Insbesondere betrifft die vorliegende Erfindung einen Bodenaufbau mit einem Träger und einer Vielzahl von Fußelementen, welche individuell einstellbar sind.

### STAND DER TECHNIK

Sanitäre Einrichtungen, wie Duschwannen, Waschtische oder andere sanitärtechnische Installationen oder Einrichtungen in Schwimmbädern, Saunen, Großküchen, Schlachthäusern, Krankenhäusern oder Betrieben der Lebensmittelwirtschaft sind im Stand der Technik bekannt und ermöglichen eine kontrollierte Nutzung von Flüssigkeiten für Reinigungs- oder Waschvorgänge oder andere Arbeitsschritte, sowie eine Ableitung der verwendeten Flüssigkeiten. In sanitären Einrichtungen können beispielsweise Wasser oder andere flüssige Nutz-, Reinigungs- oder Waschsubstanzen verwendet werden. Bekannte sanitäre Einrichtungen weisen typischerweise einen Bodenbereich auf, der die genutzte oder verbrauchte Flüssigkeit sammelt und kontrolliert abführt. Derartige Bodenbereiche können Becken oder Wannen unterschiedlicher Form aufweisen oder entsprechend geflieste oder mit einem Belag versehene Flächen umfassen.

Die Montage oder bautechnische Errichtung von sanitären Einrichtungen und insbesondere ihrer Bodenbereiche kann problematisch sein, da Ungenauigkeiten in einem den Bodenbereich aufnehmenden Rohbau oder in umgebenden Bauwerkskörpern oder eine nachträgliche Beschichtung angrenzender Bauwerkskörper zu einer ungenauen Anordnung des Bodenbereichs führen können. Eine ungenaue Anordnung des Bodenbereichs kann beispielsweise Vorsprünge verursachen, welche die Nutzbarkeit der sanitären Einrichtung herabsetzen, erschweren oder behindern können. Ferner kann eine ungenaue Anordnung dazu führen, dass der Bodenbereich nur unzureichend oder gar nicht die genutzte oder verbrauchte Flüssigkeit ableitet. Da solche Probleme erst dann erkannt werden, wenn der Bodenbereich fest montiert ist, können nachträgliche Anpassungen entweder gar nicht oder nur mühsam durchgeführt werden und erfordern schlimmstenfalls einen kompletten Neueinbau der sanitären Einrichtung.

Die bautechnische Errichtung von sanitären Einrichtungen ist daher kompliziert und fehleranfällig. Überdies können Ungenauigkeiten auch trotz einer hohen Sorgfalt bei der Montage des Bodenbereichs beispielsweise aufgrund von nachträglich vorgenommenen Änderungen an benachbarten Bauwerkskörpern auftreten.

DE 20 2008 003 050 U1 offenbart eine Duschrinnenanordnung mit einer Duschrinne und einem Rinnenabschnitt zur Entwässerung eines Duschbereichs, und einer Duschplatte, die den Duschbereich bildet und die einen Endabschnitt aufweist, wobei die Duschrinne eine Aufnahme aufweist, die seitlich benachbart zum Rinnenabschnitt angeordnet ist und in welche die Duschplatte mit ihrem Endabschnitt eingesetzt ist.

DE 10 2013 113 765 A1 offenbart ein Traggestell für eine Sanitärwanne, welche mehrere Profilstangen umfasst, die über Verbindungselemente miteinander verbunden sind, wobei die Einheit der aus Profilstangen und Verbindungselementen über mehrere Fußelemente abgestützt ist, wobei an den Profilstangen jeweils eine Dichtleiste fixiert ist und auf den Dichtleisten die Sanitärwanne aufliegt, wobei an den Dichtleisten eine Dichtungsfolie festgelegt ist. Dadurch kann unterhalb der Sanitärwanne eine Dichtungsebene durch die Dichtungsfolie ausgebildet werden.

DE 20 2010 000 963 U1 offenbart eine Duschablaufanordnung mit einer Ablaufplatte mit einem Ablaufbereich zur Entwässerung eines Duschbereichs und mit einem Auflageabschnitt mit einer befliesbaren ersten Auflagefläche, einer Duschplatte mit einer befliesbaren zweiten Auflagefläche, wobei die Duschplatte und die Ablaufplatte zumindest mittelbar miteinander verbindbar sind, wobei die erste Auflagefläche und die zweite Auflagefläche, in verbundenem Zustand von Ablaufplatte und Duschplatte, zumindest etwa in einer Ebene liegen, und einem Traggestell, mittels dem zumindest die Duschplatte gegenüber einem Boden abstützbar ist.

EP 2 333 171 A1 offenbart eine Vorrichtung mit einem Einlaufgehäuse mit einer Öffnung zum Abführen von Bodenwasser, wobei das Gehäuse mit einer Wandablauföffnung einer senkrechten Wand verbunden ist. An dem Gehäuse sind Verbindungseinheiten mit einem tiefenverstellbaren Verkleidungsrahmen angeordnet, wobei die Verbindungseinheiten durch eine in das Gehäuse eingreifende Stellschraube verstellbar sind. Das Einlaufgehäuse wird mit den Anschlusseinheiten an die senkrechte Wand angeschlossen. Die Anschlusseinheiten haben eine Öffnung, die mit einem abnehmbaren Bauschutz abgedeckt ist.

### ZUSAMMENFASSUNG

Der Erfindung liegt daher die Aufgabe zugrunde, sanitäre Einrichtungen derart weiterzuentwickeln, dass sie einfach und mit hoher Präzision errichtet oder montiert werden können.

Die erfindungsgemäße Aufgabe wird durch einen Bodenaufbau für sanitäre Einrichtungen, durch eine sanitäre Einrichtung, durch ein Verfahren zur Montage eines Bodenaufbaus für sanitäre Einrichtungen und durch ein Verfahren zur Montage einer sanitären Einrichtung gemäß dem Hauptanspruch und den nebengeordneten Ansprüchen gelöst. Vorteilhafte Ausführungsformen sind in den abhängigen Ansprüchen definiert.

Erfindungsgemäß ist ein Bodenaufbau für sanitäre Einrichtungen definiert, der einen Träger mit einer Oberseite, die zumindest abschnittsweise eine zu einer Seite des Trägers abfallende Neigung aufweist, und einer Unterseite, die im Wesentlichen parallel zu einem Unterbau einer sanitären Einrichtung angeordnet sein kann, und eine Vielzahl von Fußelementen umfasst, die mit dem Träger derart verbindbar sind, dass jedes Fußelement den Träger mit einem Abstand zum Unterbau stützt, wobei der Abstand im Wesentlichen einer Höhe des jeweiligen Fußelements entspricht, wobei die Höhe der Fußelemente individuell einstellbar ist.

Der erfindungsgemäße Bodenaufbau kann durch Montage des Trägers parallel zum bereitgestellten Unterbau initial ausgerichtet werden. Die Unterseite kann beispielsweise zumindest abschnittsweise im Wesentlichen planeben sein und parallel zum Unterbau angeordnet werden. Der Unterbau kann eine beliebige durch eine bauliche Maßnahme errichtete Konstruktion sein, beispielsweise ein Rohbau, eine gemauerte oder anderweitig aufgebaute Fläche, eine Aussparung in einem Bauwerkskörper oder ein oder mehrere den Bodenaufbau umfassende oder umgebende Bauwerkskörper sein, auf oder in die der erfindungsgemäße Bodenaufbau auf- oder eingesetzt werden kann.

Der Bodenaufbau definiert durch die Oberseite des Trägers eine Neigung, welche das Abführen von Flüssigkeiten ermöglicht. Erfindungsgemäß ist vorgesehen, dass etwaige Unebenheiten des Unterbaus durch individuelle Einstellung der Fußelemente ausgeglichen werden können. Ferner kann durch weitere Einstellung der Fußelemente der Abstand des Trägers zum Unterbau verändert werden, wodurch auch nach Einbau des Bodenelements eine Höhe des Bodenelements zum Unterbau an die umliegenden Bauwerkskörpern anpassbar ist. Hierdurch kann das Bodenelement beispielsweise derart eingestellt werden, dass es bündig mit oder mit einer gewünschten Tiefe oder Erhöhung zu einem angrenzenden Bauwerkskörper montiert werden kann. Dadurch können sowohl Ungenauigkeiten im Unterbau als auch (sich ggf. nachträglich ergebende) bauliche Gegebenheiten von angrenzenden Bauwerkskörpern nach Einbau des Bodenelements berücksichtigt werden.

Die Fußelemente können eine beliebige Mechanik zur Einstellung ihrer Höhe aufweisen. Beispielsweise können die Fußelemente ein Gewinde aufweisen und verschraubbar sein, sodass bei einer entsprechenden Drehung die Höhe der Fußelemente verändert wird. Alternativ oder zusätzlich können die Fußelemente ineinander verschiebbare und fixierbare Stäbe, eine teleskopartige Konstruktion oder Mechanik umfassen, welche durch Längsverschiebung die Höhe der Fußelemente verändern können. Die Fußelemente können mechanisch, elektrisch oder elektromagnetisch verstellbar sein und können fernen Mittel zum Blockieren der Höhenverstellung aufweisen, beispielsweise in Form von Blockierstäben oder sonstiger Arretiermittel, welche nach erfolgter Einstellung des Fußelements eine weitere Verstellung der Höhe des jeweiligen Fußelements verhindern können.

In einer bevorzugten Ausführungsform umfasst der Bodenaufbau ferner ein Ablaufbauteil mit einer Ablauföffnung, wobei das Ablaufbauteil zumindest abschnittsweise form- und/oder kraftschlüssig mit mindestens einer Seite des Trägers derart verbindbar ist, dass die Neigung der Oberseite in Richtung der Ablauföffnung verläuft. Das Ablaufbauteil kann auf oder in den Unterbau eingebaut werden, beispielsweise indem es zumindest teilweise an dem Unterbau befestigt wird, und der Träger kann mit dem Ablaufbauteil über mindestens ein Befestigungsmittel verbunden sein, welches jedoch eine Änderung des Abstands des Trägers zum Unterbau ermöglicht. Hierzu können beispielsweise der Träger, einzelne Fußelemente oder das Ablaufbauteil mit länglichen Öffnungen versehen sein, welche eine in eine Richtung feste Verbindung des Trägers mit dem Ablaufbauteil ermöglichen, wobei die Verbindung in eine im Wesentlichen dazu senkrechte Richtung lose ist, um so eine Veränderung der Höhe des Trägers zu ermöglichen. Dies kann beispielsweise durch Verschiebung der Befestigungsmittel in den länglichen Öffnungen erreicht werden. Alternativ können die Befestigungsmittel derart in den Fußelementen platziert sein, beispielsweise an einem unteren Ende, dass eine Höhenverstellung des Trägers durch Einstellen der Fußelemente die Position der Befestigungsmittel nicht ändert.

In einer weiteren Ausführungsform umfasst das Ablaufbauteil einen Geruchsverschluss, der mit der Ablauföffnung durch ein Einlaufstück verbunden ist. Das Ablaufbauteil kann somit einen integrierten Geruchsverschluss umfassen, der zu mindestens einem Ablauf führen kann. Vorzugsweise kann das Ablaufbauteil bereits so hergestellt sein, dass es mit unterschiedlichen Installationen und Anordnungen von Abläufen verwendbar ist. Beispielsweise kann der Ablauf links, rechts oder mittig nach hinten oder unten zum Ablaufbauteil vorgesehen sein. Das Ablaufbauteil ist somit flexibel einsetzbar, wodurch die Montage des Bodenaufbaus weiter vereinfacht wird.

In einer weiteren bevorzugten Ausführungsform ist das Einlaufstück in einer zur Oberseite des Trägers im Wesentlichen senkrechten Richtung verstellbar, derart, dass das Einlaufstück die Oberseite des Trägers mit einem Abstand überragt. Beispielsweise kann das Einlaufstück nach einer Höheneinstellung der Fußelemente verstellt werden, um die Ablauföffnung ausreichend oberhalb der Oberseite des Trägers zu platzieren, um die Ableitung von Flüssigkeiten über den Bodenaufbau durch die Ablauföffnung zu gewährleisten. Ferner kann die Ablauföffnung auch nachträglich nach einer Beschichtung des Trägers, beispielsweise durch Auflage einer Wanne, durch Verfliesen oder durch Auftragen einer Deckschicht, beispielsweise von Kunststoff, Metall oder Acryl, in ihrer Höhe angepasst werden, um die Ableitung von Flüssigkeit zu gewährleisten. Hierdurch wird eine flexible Montage des Bodenaufbaus ermöglicht, welche auch nachträglich auf bauliche Gegebenheiten und Änderungen angepasst werden kann.

Gemäß einer weiteren Ausführungsform umfasst der Bodenaufbau ferner ein Befestigungsbauteil zum Einbau in eine Wand, das zumindest abschnittsweise form- und/oder kraftschlüssig mit dem Ablaufbauteil verbindbar ist und eine Schiene aufweist, die in eine zur Oberseite des Trägers im Wesentlichen parallele Richtung verstellbar ist. Das Befestigungsbauteil dient vorzugsweise dem Einbau in eine Wand und kann daher auch als ein Wandeinbauteil bezeichnet werden. Das Befestigungsbauteil kann vor oder nach Einbau des Ablaufbauteils eingebaut werden und ist mit diesem verbindbar, um sowohl das Ablaufbauteil als auch das Befestigungsbauteil und gegebenenfalls den Träger oder mindesten ein Fußelement des Trägers mit einer Wand oder mit einem mindestens einen Teil einer Wand bildenden Bauwerkskörper zu verbinden. Beispielsweise kann das Befestigungsbauteil oberhalb vom Ablaufbauteil angeordnet sein. Durch die verstellbare Schiene kann ferner ein Grad der Abdeckung des Ablaufbauteils durch das Befestigungsbauteil eingestellt werden, wodurch beispielsweise eine Verkleidung der Wand oder mindestens eines Teils einer Wand, beispielsweise durch Verfliesen oder durch Beschichten durch ein anderes Deckmaterial, erreicht werden kann.

Somit kann der Bodenaufbau an eine Vielzahl von baulichen Gegebenheiten angepasst werden, insbesondere durch Verstellen der Höhe des Träger, um den Boden auszurichten, durch Verstellen der Höhe des Einlaufstücks, um die Ablauföffnung in Bezug auf eine Oberfläche des Trägers auszurichten, und/oder durch Verstellen der Schiene, um eine gewünschte Abdeckung der Ablauföffnung zu erreichen. Keine der Maßnahmen erfordert eine Neumontage des Bodenaufbaus und kann insbesondere auch nach einer Fixierung der einzelnen Komponenten an einem Unterbau erfolgen. Hierdurch wird eine besonders flexible und einfache Montage des Bodenaufbaus ermöglicht, welche an unterschiedliche, auch nachträglich geänderte, bauliche Gegebenheiten, Form- und Materialeigenschaften anpassbar ist.

Gemäß einer weiteren Ausführungsform weist der Träger eine Vielzahl von Öffnungen zwischen der Oberseite und der Unterseite auf, wobei die Fußelemente derart mit dem Träger verbindbar sind, dass die Höhe der Fußelemente durch die Öffnungen einstellbar ist. Die Öffnungen können nach einer Platzierung und Verbindung der Fußelemente mit dem Träger eine Einstellung der Höhe der Fußelemente von oben erlauben. Daher kann der Bodenaufbau auch in einem den Bodenaufbau umgebenen Bauwerkskörper eingebaut werden, ohne die Einstellbarkeit der Fußelemente zu behindern. Die Fußelemente können vorzugsweise mit oder in den Öffnungen verschraubt sein. Die Öffnungen können eine an die Form der Fußelemente angepasste Form aufweisen, sodass die Fußelemente direkt an oder in den Öffnungen befestigt werden können und von oben einstellbar sein können. Ferner können die Öffnungen Ausnehmungen oder Aussparungen aufweisen, welche eine Blockierung der Höhenverstellung der eingesetzten Fußelemente, beispielsweise durch einen Blockierstab oder -schieber erlauben.

In einer weiteren Ausführungsform sind die Öffnungen gemäß einer (regelmäßigen) Struktur angeordnet. Vorzugsweise können die Öffnungen in einer gitterartigen, wabenförmigen, kreisförmigen oder spiralartigen Struktur angeordnet sein. Eine regelmäßige Struktur der Öffnungen erlaubt eine flexible Konfiguration der Fußelemente im Hinblick auf die Form des Unterbaus oder der benachbarten Bauwerkskörper und bereits vorhandene Installationen, wie beispielsweise vorhandene Leitungen oder Rohre. Durch eine flexible Anordnung der Fußelemente kann somit direkt auf die baulichen Gegebenheiten vor Ort reagiert werden ohne eine weitergehende Anpassung des Trägers vornehmen zu müssen. Zusätzlich oder alternativ zu der regelmäßigen Struktur der Öffnungen kann der Träger weitere Aussparungen umfassen. Zum einen kann hiermit der Materialaufwand für den Träger reduziert werden. Zum anderen kann der Bodenaufbau vorzugsweise mit mindestens einem Steckteil ausgestattet sein, welches in die Aussparungen einsetzbar ist. Das Steckteil kann eine Öffnung aufweisen, welche den Öffnungen des Trägers entspricht, sodass Fußelemente auch in die Öffnungen des Steckteils einsetzbar sind und den Träger stützen. Hierdurch wird die Flexibilität der Platzierung der Fußelemente, beispielsweise im Hinblick auf Rohre, Kabel und andere Installationen und bauliche Gegebenheiten weiter erhöht.

In einer weiteren Ausführungsform umfasst der Bodenaufbau ferner mindestens eine Bodenplatte zur Auflage auf dem Träger. Die Bodenplatte kann beispielsweise eine Hartschaumplatte, eine Platte mit verfliesbarem Gewebe, und/oder ein Lochblech in beliebiger Kombination aufweisen. Die mindestens eine Bodenplatte kann nach Einbau des Trägers auf dem Träger verschraubt oder anderweitig befestig sein. Es sollte verständlich sein, dass auch eine Vielzahl von Bodenplatten zur Montage auf dem Träger vorgesehen seinen können, um so eine gewünschte Stabilität und weitere physikalische Eigenschaften der sanitären Einrichtung zu erreichen.

Gemäß einer weiteren Ausführungsform ist der Bodenaufbau verfliesbar oder zur Aufnahme einer Wanne eingerichtet oder kann mit Kunststoff ausgekleidet werden. Beispielsweise kann der Träger mit einer Hartschaumplatte mit verfliesbarem Gewebe und einem dazwischen verklebten Lochblech versehen sein, sodass der Bodenaufbau verfliest werden kann. Alternativ kann auch eine angepasste Acryl- oder Stahl-emaillierte Wanne eingesetzt werden. Die Wahl einer geeigneten Deckschicht oder Wanne kann auch nach Montage des Bodenaufbaus getroffen werden, da dieser durch die Höhenverstellbarkeit auch an die Höhe und Beschaffenheit der Beschichtung oder Wanne anpassbar bleibt, um beispielsweise einen bündigen Einbau zu gewährleisten. Alternativ kann der Bodenaufbau, beispielsweise durch die Öffnungen im Träger, mit Estrich oder einem anderen Füllmaterial ausgefüllt werden, um so eine Auskleidung durch Kunststoff oder weitere Deckmaterialien zu ermöglichen, was beispielsweise in Krankenhäusern oder anderen Installationsumgebungen mit entsprechenden Hygieneanforderungen erwünscht und vorteilhaft sein kann.

Gemäß einer weiteren Ausführungsform umfasst der Bodenaufbau eine Wanne. Vorzugsweise umfasst der Bodenaufbau eine Duschwanne.

Erfindungsgemäß ist ferner eine sanitäre Einrichtung vorgesehen, welche einen Bodenaufbau gemäß einer oder mehreren Ausführungsformen der vorliegenden Erfindung umfasst. Vorzugsweise kann die sanitäre Einrichtung eine Dusche, eine Duschwanne, ein Waschtisch, ein Becken, oder vergleichbare sanitäre Installationen oder Einrichtungen sein.

In einer besonders bevorzugten Ausführungsform der vorliegenden Erfindung ist die sanitäre Einrichtung eine Dusche.

Erfindungsgemäß ist ferner ein Verfahren zur Montage eines Bodenaufbaus für sanitäre Einrichtungen oder zur Montage einer sanitären Einrichtung angegeben, das ein Bereitstellen eines Unterbaus für eine sanitäre Einrichtung, ein Einbauen eines Trägers mit einer Oberseite, die zumindest abschnittsweise eine zu einer Seite des Trägers abfallende Neigung aufweist, und einer Unterseite im Wesentlichen parallel zum Unterbau, ein Verbinden einer Vielzahl von Fußelementen mit dem Träger derart, dass jedes Fußelement den Träger mit einem Abstand zum Unterbau stützt, wobei der Abstand im Wesentlichen einer Höhe des jeweiligen Fußelements entspricht, und ein Einstellen der Höhe von mindestens einem der Fußelemente nach Einbau des Trägers umfasst.

Die Montage (oder Errichtung) des Bodenaufbaus oder der sanitären Einrichtung kann somit auch nach Einbau des Trägers oder des Bodenaufbaus flexibel an die baulichen Gegebenheiten des Unterbaus oder der umliegenden Bauwerkskörper, wie Materialeigenschaften und Form, beispielsweise Höhe und Form von Boden- oder Wandbeschichtungen, angepasst werden. Hierdurch wird eine besonders einfache und flexible Montage des Bodenaufbaus oder der sanitären Einrichtung erreicht.

In einer bevorzugten Ausführungsform umfasst das Verfahren ferner ein Einbauen eines Ablaufbauteils mit einer Ablauföffnung, derart, dass das Ablaufbauteil zumindest abschnittsweise form- und/oder kraftschlüssig mit mindestens einer Seite des Trägers derart verbunden ist, dass die Neigung der Oberseite in Richtung der Ablauföffnung verläuft, wobei das Einstellen der Höhe auch nach dem Einbau des Ablaufbauteils erfolgen kann. Vorzugsweise kann nach Bereitstellung des Unterbaus das Ablaufbauteil platziert und am Unterbau oder einem geeigneten Bauwerkskörper befestigt werden. Nachfolgend kann der Träger mit entsprechend verbundenen Fußelementen im oder am Unterbau in Bezug auf das Ablaufbauteil platziert und mit diesem form- und/oder kraftschlüssig verbunden werden. Durch Verstellen der Höhe der Fußelemente kann der Träger am Ablaufbauteil und/oder Unterbau und/oder den umliegenden Bauwerkskörpern ausgerichtet werden, um so eine gewünschte Ausrichtung des Trägers zu erreichen.

In einer weiteren Ausführungsform umfasst das Ablaufbauteil einen integrierten Geruchsverschluss, der mit der Ablauföffnung durch ein Einlaufstück verbunden ist, welche vorzugsweise in einer zur Oberseite des Trägers im Wesentlichen senkrechten Richtung verstellbar ist, sodass das Einlaufstück die Oberseite des Trägers mit einem Abstand überragt. Hierdurch kann auch nach Einbau und Verbindung des Trägers mit dem Ablaufbauteil eine Position der Ablauföffnung in Bezug auf eine Oberseite des Trägers durch Verstellen des Einlaufstücks erreicht werden.

In einer weiteren Ausführungsform umfasst das Verfahren ferner ein Einbauen eines Befestigungsbauteils in eine Wand und/oder in einen Bauwerkskörper, der zumindest einen Teil einer Wand bildet, wobei das Befestigungsbauteil zumindest abschnittsweise form- und/oder kraftschlüssig mit dem Ablaufbauteil verbunden ist. Das Befestigungsbauteil dient vorzugsweise dem Einbau in eine Wand und kann daher auch als ein Wandeinbauteil bezeichnet werden. Das Verfahren kann ferner ein Verstellen einer Schiene des Befestigungsbauteils in eine zur Oberseite des Trägers im Wesentlichen parallele Richtung umfasst.

Gemäß einer weiteren Ausführungsform umfasst das Verfahren ein Einstellen der Höhe der Fußelemente durch Öffnungen im Träger zwischen der Oberseite und der Unterseite des Trägers. Vorzugsweise können die Öffnungen gemäß einer Struktur, beispielsweise einer gitterartigen, wabenförmigen, kreisförmigen oder einer spiralartigen Struktur angeordnet sein.

In einer bevorzugten Ausführungsform umfasst das Verfahren ferner ein Auflegen mindestens einer Bodenplatte auf den Träger.

In einer weiteren Ausführungsform umfasst das Verfahren ferner ein Verfliesen des Bodenaufbaus oder ein Auskleiden des Bodenaufbaus mit Kunststoff und/oder ein Montieren einer Wanne auf dem Bodenaufbau.

Erfindungsgemäß ist ferner ein Verfahren zur Montage einer sanitären Einrichtung offenbart, welches ein Errichten eines Bodenaufbaus einer sanitären Einrichtung gemäß einem Verfahren nach einer Ausführungsform der vorliegenden Erfindung und ein Errichten der sanitären Einrichtung auf dem Bodenaufbau umfasst.

Es sollte verständlich sein, dass die Verfahren zur Montage gemäß weiteren Ausführungsformen der vorliegenden Erfindung funktionale Merkmale aufweisen können, welche strukturellen Merkmalen des erfindungsgemäßen Bodenaufbaus oder der sanitären Einrichtung gemäß Ausführungsformen der vorliegenden Erfindung entsprechen können. Ferner sollte verständlich sein, dass funktionale Merkmale von Verfahren gemäß Ausführungsformen der vorliegenden Erfindung auch als strukturelle Merkmale des erfindungsgemäßen Bodenaufbaus oder der sanitären Einrichtung in weiteren Ausführungsformen verkörpert sein können.

### KURZE BESCHREIBUNG DER ZEICHNUNGEN

Weitere Vorteile des erfindungsgemäßen Bodenaufbaus, der sanitären Einrichtung und des Verfahrens zur Montage des Bodenaufbaus und/oder der sanitären Einrichtung ergeben sich aus der folgenden Beschreibung, in der die Erfindung anhand von Ausführungsbeispielen unter Bezugnahme auf die beigefügten Zeichnungen näher erläutert wird. Darin zeigen:
- Figur 1: schematische Ansichten eines Trägers eines Bodenaufbaus und einen Schnitt durch ein Fußelement des Bodenaufbaus gemäß einer Ausführungsform der vorliegenden Erfindung;
- Figur 2: ein Detail einer Öffnung eines Trägers eines Bodenaufbaus gemäß einer Ausführungsform der vorliegenden Erfindung;
- Figuren 3A bis 3C: schematische Ansichten eines Bodenaufbaus gemäß Ausführungsformen der vorliegenden Erfindung;
- Figur 4: eine Vorderansicht eines Bodenaufbaus gemäß einer Ausführungsform der vorliegenden Erfindung;
- Figur 5: eine Draufsicht auf ein Ablaufbauteil eines Bodenaufbaus gemäß einer Ausführungsform der vorliegenden Erfindung; und
- Figur 6: eine Seitenansicht eines Ablaufbauteils eines Bodenaufbaus gemäß einer Ausführungsform der vorliegenden Erfindung.

### DETAILLIERTE BESCHREIBUNG

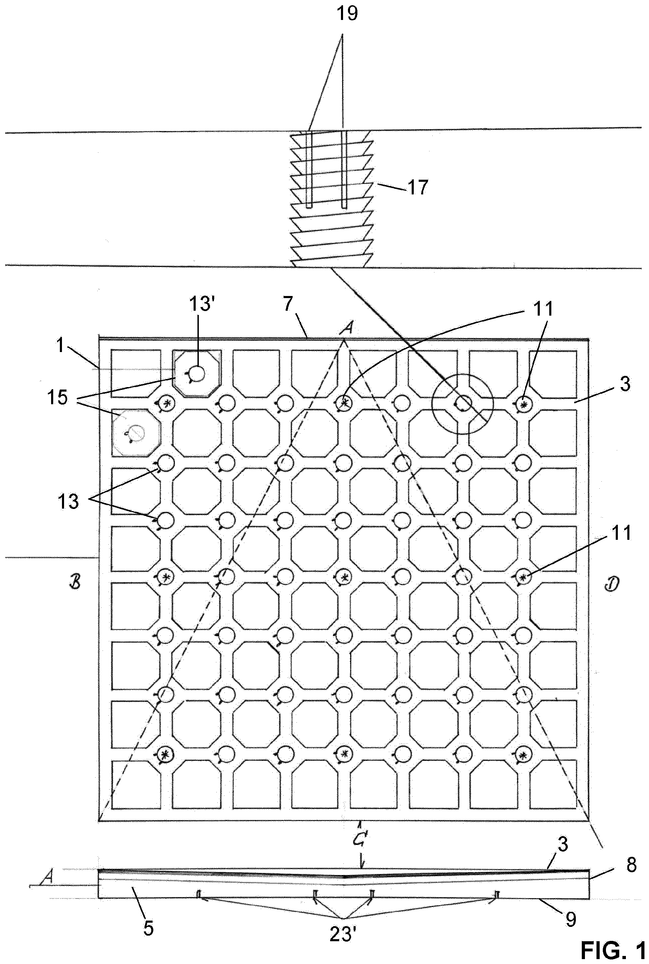

Figur 1 zeigt eine Draufsicht auf einen Träger eines Bodenaufbaus gemäß einer Ausführungsform der vorliegenden Erfindung.

Träger 1 weist eine Oberseite 3 und eine Unterseite 5 auf. Wie im Schnitt A zu sehen ist, weist die Oberseite 3 eine zu einer Seite 7 des Trägers abfallende Neigung auf, um so eine Ableitung von Flüssigkeiten über die Oberseite (oder über einen entsprechenden auf der Oberseite angeordneten Aufbau) zu ermöglichen. Die Oberfläche der Oberseite 3 kann ferner mehr als eine Neigung aufweisen, welche jeweils eine Ableitung der Flüssigkeit zu unterschiedlichen Seiten ermöglichen können. Die Oberseite 3 kann beispielsweise mehrere Abschnitte mit einer entsprechenden Neigung aufweisen, beispielsweise in einer V-Form, X-Form oder U-Form, welche die Ableitung der Flüssigkeit mindestens zur Seite 7 hin ermöglichen. Der Träger 1 kann ferner eine Dichtung 8 aufweisen, welche aus Gummi oder einem anderen geeigneten Material sein kann.

Die Unterseite 5 des Trägers 1 kann zumindest abschnittsweise planeben ausgestaltet sein und wird, wie aus dem Schnitt A ersichtlich, im Wesentlichen parallel zu einem Unterbau 9 einer sanitären Einrichtung montiert.

Der Träger 1 ist durch eine Vielzahl von Fußelementen 11 mit einem Abstand zum Unterbau 9 gestützt, welche an Öffnungen 13 des Trägers 1 angeordnet sein können. Die Höhe der Fußelemente 11 ist hierbei individuell einstellbar, wodurch ein Abstand der Unterseite 5 des Trägers 1 zum Unterbau 9 definiert ist. Die Fußelemente 11 können ein Außengewinde aufweisen. Vorzugsweise können die Fußelemente 11 an den mit * gekennzeichneten Öffnungen 13 in den Träger 1 eingesetzt sein. Die Öffnungen 13 können ein entsprechendes Innengewinde aufweisen, um die Fußelemente 11 aufzunehmen. Wie in Figur 1 dargestellt, können beispielsweise neun Fußelemente 11 vorgesehen sein. Es sollte jedoch verständlich sein, dass auch eine andere Anzahl von Fußelementen 11 zum Stützen des Trägers 1 vorgesehen sein kann und dass die vorliegende Erfindung nicht auf eine bestimmte Anzahl der Fußelemente 11 beschränkt ist. Beispielsweise können vier, fünf, sechs, acht, zwölf oder sechzehn Fußelemente vorgesehen sein. Ferner kann die Anzahl der Fußelemente an die Form des Unterbaus 9 oder weitere bauliche Gegebenheiten, beispielsweise die Form der umliegenden Bauwerkskörper (nicht gezeigt) angepasst sein. Die Positionierung der Fußelemente 11 an den mit * gekennzeichneten Positionen ist nicht zwingend. Vielmehr können die Fußelemente 11 in beliebigen anderen Öffnungen 13 des Trägers 1 angeordnet sein. Die Öffnungen 11 können gemäß einer regelmäßigen Struktur, beispielsweise der in Figur 1 dargestellten gitterartigen Struktur, angeordnet sein.

Um die Flexibilität der Platzierung der Fußelemente 11 weiter zu erhöhen, können Steckteile 15 vorgesehen sein, welche in weitere Aussparungen des Trägers 1 einsetzbar sind und Hilfsöffnungen 13' definieren, die zum Einsatz von Fußelementen 11 geeignet sind. Die Hilfsöffnungen 13' können in ihrer Form den Öffnungen 13 entsprechen. Hierdurch kann auf weitere bauliche Gegebenheiten reagiert werden, beispielsweise Vorsprünge oder Hindernisse im Unterbau 9, wie z.B. Rohre, Kabel und Ähnliches, welche durch den Einsatz der Steckteile effektiv überbrückt werden können. Es sollte jedoch verständlich sein, dass durch die Anordnung der Öffnungen 11 bereits eine ausreichende Flexibilität der Anordnung der Fußelemente 11 gegeben sein kann, sodass Steckteile 15 gänzlich optional sein können.

Die Form des in Figur 1 dargestellten Trägers 1 ist rechteckig. Es ist jedoch verständlich, dass der Träger 1 eine beliebige andere Form aufweisen kann, beispielsweise eine dreieckige, eine viereckige oder eine fünfeckige Form und dass der Träger 1 ferner rund, elliptisch oder oval sein kann. Ferner kann der Träger 1 derart vorkonfiguriert sein, dass Teile des Trägers abgeschnitten, herausgebrochen oder anderweitig entfernt werden können. Beispielsweise kann der Träger 1 so eingerichtet sein, dass einzelne seitliche Zellen entfernbar sind, um so den Träger 1 an die baulichen Gegebenheiten vor Ort anzupassen. Die einzelnen Fußelemente 11 können dann entsprechend in den verbleibenden Öffnungen 13 oder in Hilfsöffnungen 13' platziert werden, um den Träger 1 zu stützen.

Nach Einbau des Trägers 1 bleibt der Träger 1 höhenverstellbar, indem die Höhe der einzelnen Fußelemente 11 individuell eingestellt werden kann. Hierdurch kann beispielsweise auf die baulichen Gegebenheiten reagiert werden, welche sich auch nach Einbau des Trägers 1 ergeben können, beispielsweise indem eine Höhe der Bodenbeschichtung der umliegenden Bauwerkskörper erst nachträglich festgelegt wird oder sich durch Auflage weiterer Schichten ändert. Eine Höheneinstellung kann beispielsweise durch Verschrauben der Fußelemente oder durch ein teleskopartiges Verschieben der Fußelemente 11 erreicht werden.

Ein Beispiel eines Fußelements 11 mit einem Innengewinde ist in Figur 1 im Schnitt 17 dargestellt. Um ein nachträgliches Verstellen zu verhindern, kann das Fußelement 11 eine, zwei oder mehr Nuten für Blockierstäbe aufweisen. Obwohl ein Fußelement 11 mit einem Innengewinde im Schnitt 17 dargestellt ist, sollte verständlich sein, dass andere Arten von höhenverstellbaren Fußelementen 11 in beliebiger Anzahl und Kombination vorgesehen sein können.

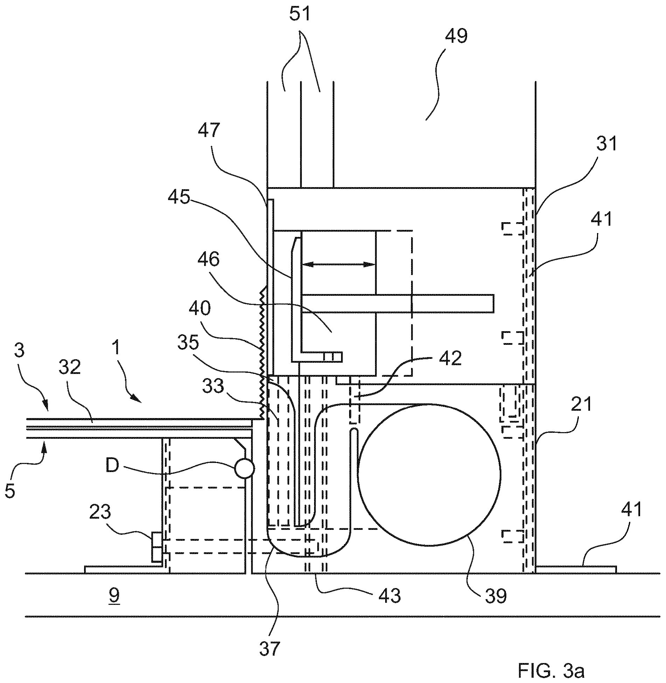

Der Träger 1 kann form- und/oder kraftschlüssig mit einem Ablaufbauteil verbunden sein. Beispielsweise kann der Träger 1 mit dem Ablaufbauteil über Befestigungsmittel, beispielsweise Schrauben, verbunden sein. Hierzu kann der Träger 1 eine Vielzahl von Langlöchern 23 aufweisen, durch die die Befestigungsmittel geführt werden können. Weitere Details zur Befestigung des Trägers 1 an ein Ablaufbauteil 21 sind in Figur 3A dargestellt.

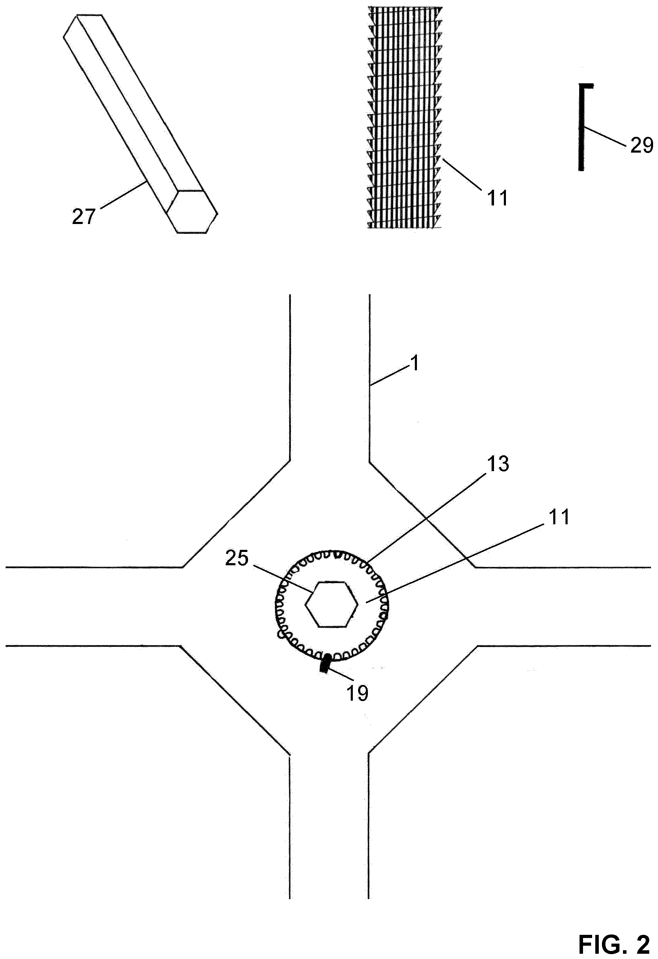

Figur 2 zeigt eine Draufsicht auf eine Öffnung 13 des in Figur 1 gezeigten Trägers 1 mit einem eingeschraubten Fußelement 11. Das Fußelement 11 weist, ähnlich wie das in Figur 1 dargestellte Fußelement 11, ein Gewinde auf. Das Fußelement 11 kann eine durchgehende Öffnung 25 aufweisen, in welche ein Steckschlüssel zur Höheneinstellung einsetzbar ist. Das Fußelement 11 kann ferner durch Einstecken eines Verlängerungsstabs 27 in die durchgehende Öffnung 25 mit einem weiteren Fußelement (nicht gezeigt) verlängert werden. Entsprechend kann die Öffnung 25 zur Aufnahme des Verlängerungsstabs 27 ausgebildet sein. Der Verlängerungsstab 27 kann zwei oder mehr Fußelemente verbinden, um so eine gewünschte Höheneinstellung zu ermöglichen. Nach erfolgter Höheneinstellung kann das Gewinde des Fußelements 11 durch Einstecken eines Blockierstabs 29 in eine der Nuten 19 blockiert werden.

Figuren 3A bis 3C zeigen Schnitte eines Bodenaufbaus gemäß Ausführungsformen der vorliegenden Erfindung.

Figur 3A zeigt eine Ausführungsform des erfindungsgemäßen Bodenaufbaus mit einem Träger 1, einem Ablaufbauteil 21 und einem Wandeinbauteil 31. Der Träger 1 kann über Befestigungsmittel 23 form- und/oder kraftschlüssig mit dem Ablaufbauteil 21 verbunden sein. Ferner kann das Ablaufbauteil 21 mit dem Wandeinbauteil 31 form- und/oder kraftschlüssig verbunden sein.

Die Oberseite 3 des Trägers 1 kann eine verfliesbare Oberfläche 32 aufweisen.

Das Ablaufbauteil 21 weist eine Ablauföffnung 33 auf, welche über ein Einlaufstück 35 mit einem Geruchsverschluss 37 und mit einem Ablauf 39 verbunden ist. Die Ablauföffnung 33 kann im Einlaufstück 35 eingefräst sein. Der Träger 1 kann in seiner Höhe und Neigung beispielsweise über die in Figur 1 beschriebenen Mittel derart einstellbar sein, dass eine über die Oberseite 3 des Trägers 1 ablaufende Flüssigkeit zur Ablauföffnung 33 und schließlich über das Einlaufstück 35 und den Geruchsverschluss 37 zum Ablauf 39 geführt wird. Der Geruchsverschluss 37 kann im Ablaufbauteil 21 mittig integriert sein. Der Ablaufanschluss kann im Ablaufbauteil 21 nach hinten, nach unten oder seitlich nach links oder rechts vorbereitet sein und je nach Bedarf und baulichen Gegebenheiten geöffnet werden. Entsprechend können eine oder mehrere dieser Ablaufanschlüsse verblendet bereitgestellt sein und einer oder mehrere der Ablaufanschlüsse können geöffnet werden, um so das Ablaufbauteil 21 an den Ablauf 39 anzuschließen.

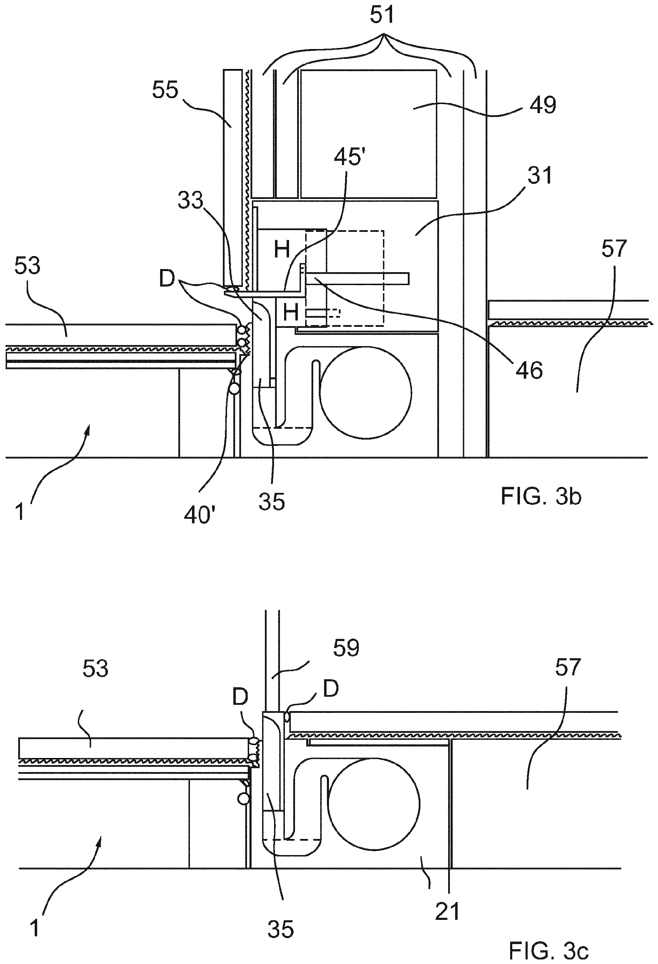

Das Ablaufbauteil 21 kann ferner eine Blende 40 aufweisen, welche sich über zumindest einen Teil der Länge des Ablaufbauteils 21 erstrecken kann und eine Front des Bodenaufbaus definieren kann. Wie in Fig. 3A dargestellt, kann sich die Blende 40 über die gesamte Länge des Ablaufbauteils 21 erstrecken. Die Front kann beispielsweise die zur Ablauföffnung 33 lateralen Bereiche des Ablaufbauteils 21 abdecken und/oder eine untere Kante der Ablauföffnung 33 definieren, wie es nachfolgend in Figur 3B gezeigt ist. Die Blende 40 kann mehrere horizontale Bruchstellen aufweisen, welche gleichmäßig beabstandet sein können, an welchen die Blende 40 nach Einbau in einer gewünschten Höhe abgebrochen werden kann.

Der Träger 1 kann mit dem Ablaufbauteil 21 über Befestigungsmittel 23 verbunden werden, wobei beispielsweise eine oder mehrere Dichtungen D, beispielsweise aus Gummi, zur Abdichtung vorgesehen sein können. Wie in Figur 3A dargestellt, kann die Dichtung D derart angeordnet sein, dass auch bei einer Höhenverstellung des Trägers 1 eine dichte Verbindung zwischen dem Träger 1 und dem Ablaufbauteil 21 bestehen bleibt.

Das Einlaufstück 35 kann höhenverstellbar sein, derart, dass die Ablauföffnung 33 die Oberseite 3 des Trägers 1 mit einem Abstand überragt. Hierdurch kann sichergestellt werden, dass die Ablauföffnung 33 einen gewünschten Durchfluss der abzuleitenden Flüssigkeit aufnehmen kann und bündig mit einer Oberfläche einer Bodenbeschichtung des Trägers 1 abschließt. Somit kann auch nach Einbau des Trägers 1 der Träger 1 an eine Bodenbeschichtung der Oberseite 3, beispielsweise durch Hartschaumplatten mit befliesbarem Gewebe und/oder durch Verfliesen derselben, angepasst werden, um so eine gewünschte Anordnung zur Ablauföffnung 33 zu gewährleisten. Alternativ oder zusätzlich kann die Ablauföffnung durch Verstellen des Einlaufstücks 35 justiert werden.

Das Einlaufstück 35 kann zur Höheneinstellung beispielsweise mit einem Innengewinde für Madenschrauben ausgestattet sein. Es ist jedoch verständlich, dass auch andere Verfahren zur Höheneinstellung des Einlaufstücks 35 vorgesehen sein können und die vorliegende Erfindung ist nicht auf eine bestimmte Ausgestaltung beschränkt.

Das Wandeinbauteil 31 kann über Innengewinde 42 mit dem Ablaufbauteil 21 form- und/oder kraftschlüssig verbunden oder an diesem befestigt sein. Das Wandeinbauteil 31 ist für den Einbau in eine Wand oder in einen zumindest einen Teil einer Wand definierenden Bauwerkskörper vorgesehen. Beispielsweise kann das Wandeinbauteil 31 einen oder mehrere Füße 41 aufweisen, welche am Boden und/oder an einem Bauwerkskörper befestigt sein können. Ferner kann auch das Befestigungsbauteil 31 über Gewindestäbe in seiner Höhe einstellbar sein.

Das Wandeinbauteil 31 kann eine Schiene 45 aufweisen, welche in eine zur Oberfläche 3 des Trägers 1 im Wesentlichen parallele Richtung verschiebbar ist, um variabel das Einlaufstück 35 und somit die Aublauföffnung 33 zu überragen. Hiermit kann der Bodenaufbau an eine Dicke eines Wandbelag angepasst werden. Die Schiene 45 kann in ein in eine zur Oberfläche 3 des Trägers 1 im Wesentlichen parallele Richtung verschiebbares Bauteil 46 eingesetzt sein. Die Schiene 45 kann mit dem Bauteil 46 verschraubt oder anderweitig befestigt sein. Wie in Figur 3A dargestellt, kann die Schiene ein L-Profil aufweisen. Es sollte jedoch verständlich sein, dass die Schiene auch ein anderes Profil, beispielsweise ein U- oder ein T-Profil aufweisen kann. Ein längerer Abschnitt des Profils der Schiene 45 kann auf dem Bauteil 46 aufliegen und/oder ein kürzerer Abschnitt der Schiene 45 kann in eine im Bauteil 46 vorgesehene Aussparung eingesetzt sein. Diese Konfiguration kann beispielsweise vorteilhaft für den Transport des Bodenaufbaus sein und die Schiene 45 kann bei der Montage aus dem Bauteil 46 herausgenommen, gedreht und mit einem anderen Abschnitt des Profils am Bauteil 46 befestigt werden, wie es beispielsweise nachfolgend in Figur 3B gezeigt ist.

In der in Figur 3A dargestellten Ausführungsform ist die Oberfläche 3 des Trägers 1 mit zwei Hartschaumplatten mit befliesbarem Gewebe mit einem verklebten Lochblech verkleidet. Beispielsweise können 3 Millimeter dicke Hartschaumplatten vorgesehen sein, welche mit einem 1 Millimeter starken Lochblech verklebt sein können. Es sollte jedoch verständlich sein, dass auch andere Platten einer anderen Dicke und eines anderen Materials und/oder ein anderes Gewebe vorgesehen sein können. Beispielsweise können Hartschaumplatten mit einer Dicke von 1, 2, 3, 4, oder 5 Millimeter vorgesehen sein. Bevorzugt ist die Dicke der Hartschaumplatten im Bereich zwischen 0,5 bis 10 Millimetern gewählt. Ferner können auch mehr als zwei Platten oder lediglich eine Platte vorgesehen sein. Zusätzlich können Platten 47, beispielsweise Hartschaumplatten, vorgesehen sein, welche nach Einbau des Bodenaufbaus zugeschnitten und mit einem Wandbelag überdeckt sein können.

Figur 3A zeigt oberhalb des Wandeinbauteils 31 einen Wandaufbau mit einem Rigipsprofil 49 mit angelagerten Rigipsplatten 51. Beispielsweise können Rigipsplatten 51 mit einer Dicke von 12,5 Millimetern und ein Rigipsprofil 49 von 75 Millimetern vorgesehen sein. Es sollte jedoch verständlich sein, dass auch andere Dicken von Rigipsplatten oder ein Rigipsprofil mit einer anderen Tiefe vorgesehen sein können und das Wandeinbauteil 31 kann entsprechend ausgestaltet sein, um ein derart gestaltetes Wandprofil aufzunehmen.

Die in Figur 3A dargestellte Ausführungsform eines erfindungsgemäßen Bodenaufbaus kann durch einzelne höhenverstellbaren Elemente, beispielsweise Fußelemente 11, Einlaufstück 35 und/oder Schiene 45 flexibel in Bezug auf die baulichen Gegebenheiten auch nach Einbau des Bodenaufbaus anpassbar sein.

In einer bevorzugten Ausführungsform kann der Bodenaufbau für den Einbau ab einer Estrichhöhe von sieben Zentimetern aufwärts geeignet sein. Bei einer Estrichhöhe ab sieben Zentimetern kann der Träger 1 beispielsweise 15 Millimeter nach oben verstellbar sein, ohne dass das Ablaufbauteil 21 verstellt werden muss. Vielmehr kann die Ablauföffnung 33 über das Verstellen des Einlaufstücks 35 an den verstellten Träger 1 angepasst werden, um den Ablauf der Flüssigkeit von der Oberfläche 3 des Trägers 1 zu gewährleisten. Teile des Bodenaufbaus können beispielsweise mit Estrich ausgegossen oder mit anderen Materialen fixiert werden. Obwohl das Ablaufbauteil 21 bereits eingefasst (und fixiert) sein kann, bleibt der Bodenaufbau über den Träger 1 (und das Einlaufstück 35) höhenverstellbar. Bei einer höheren Estrichhöhe, beispielsweise ab neun Zentimetern, kann das Bodengestell ebenfalls nach unten, beispielsweise um 20 Millimeter verstellbar bleiben, was ebenfalls keine Verstellung oder Neuanordnung des Ablaufbauteils 21 erfordert.

Es sollte verständlich sein, dass konkrete Zahlenbeispiele bevorzugte Ausführungsform definieren, dass die vorliegende Erfindung jedoch auch an andere Höhen oder Formen der umliegenden Bauwerkskörper anpassbar ist und dass die Flexibilität über eine entsprechende Ausgestaltung der höhenverstellbaren Elemente des Bodenaufbaus definierbar ist.

Der in Figur 1 dargestellte Träger 1, die Steckteile 15 und/oder die Fußelemente 11 können aus Kunststoff oder einem anderen Material hergestellt sein, beispielsweise aus Metall, Holz oder einer Legierung. Die Fußelemente 11 können in verschiedenen Längen hergestellt sein und können ferner durch geeignete Mittel, beispielsweise Verlängerungsstäbe 27, verlängerbar oder ablängbar sein.

Der Einbau des Trägers 1 in Verbindung mit Ablaufbauteil 21 und/oder Befestigungsbauteil 31 kann von oben in einer besonders einfachen und mühelosen Art und Weise erfolgen. Nach dem Einbau des Trägers 1, des Ablaufbauteils 21 und/oder des Wandeinbauteils 31 kann der Träger 1 verkleidet werden, beispielsweise mit den in Figur 3A dargestellten drei Millimeter starken Hartschaumplatten mit verfliesbarem Gewebe und einem dazwischen verklebten Lochblech, das ein Millimeter stark sein kann. Diese können nach dem Einbau und einer Justierung des Trägers 1 auf dem Träger 1 verschraubt werden. Anschließend kann ein derart verkleideter Träger 1 verfliest werden oder eine Acryl- oder Stahl-emaillierte oder eine andere Wanne aufnehmen. Die Höhe des Trägers 1 kann beispielsweise um bis zu 15 Millimeter nach oben verstellt werden, um einen bündigen Einbau mit Fliesen und/oder Wanne zu gewährleisten.

In einer weiteren Ausführungsform kann durch das Weglassen von Hartschaumplatten der Träger 1 durch die Öffnungen 13 auch mit Estrich oder einem anderen Füllmaterial ausgefüllt werden, wodurch ein Belag mit Kunststoff oder anderen vergleichbaren Materialen ermöglicht wird, was beispielsweise in Krankenhäusern oder anderen Einrichtungen mit erhöhten Hygieneanforderungen vorteilhaft sein kann.

Figur 3B zeigt eine weitere Ausführungsform eines erfindungsgemäßen Bodenaufbaus mit einem Träger 1, einem Ablaufbauteil 21 und einem Befestigungsbauteil 31, welche den in Figur 3A dargestellten Komponenten entsprechen können. Figur 3B zeigt ferner einen Belag 53 des Trägers 1, der mit Dichtungen D, beispielsweise aus Silikon oder einer anderen geeigneten Dichtungsmasse, gegenüber dem Ablaufbauteil 21 und dem Einlaufstück 35 abgedichtet ist. Das Ablaufbauteil 21 weist ferner eine Blende 40' auf, welche der in ihrer Höhe angepassten Blende 40 aus Figur 3A entsprechen kann. Die Höhe der Ablauföffnung 33 kann über ein Einlaufstück 35 an die Dicke des Belags 53 angepasst sein. Die Blende 40' kann hierbei eine untere Kante der Ablauföffnung 33 definieren.

Ferner umfasst das Wandeinbauteil 31 eine Schiene 45', welche in eine zur Oberfläche des Trägers 1 im Wesentlichen parallele Richtung verschiebbar ist. Die Schiene 45' kann an einem verschiebbaren Bauteil 46 befestigt sein. Wie in Figur 3B dargestellt, kann die Schiene 45' mit einem kürzeren Abschnitt des Profils am Bauteil 46 befestigt sein. Die Schiene 45' kann initial, beispielsweise für Transportzwecke mit einem längeren Abschnitt des Profils in das Bauteil 46 eingesteckt sein, ähnlich zur Schiene 45 aus Figur 3A. Beim Aufbau kann die Schiene 45' aus dem Bauteil 46 herausgezogen, gedreht und am Bauteil 46 befestigt werden, beispielsweise verschraubt werden, derart, dass der längere Abschnitt in die Richtung der Verschiebung der Schiene 45' weist. Die Schiene 45' kann eingerichtet sein, einen Wandbelag 55, beispielsweise Fliesen, zu stützen oder zu begrenzen, der über eine Dichtung D mit der Schiene 45' verbunden sein kann. Das Bauteil 46 kann zur Tiefen- und/oder Höheneinstellung vorgesehen sein. Die durch das Verschieben der Schiene 45' und/oder des Bauteils 46 auftretenden Hohlräume H können beispielsweise durch Montageschaum gefüllt werden.

Das Wandeinbauteil 31 kann in einen Wandaufbau, z.B. bestehend aus einer oder mehreren Rigipsplatten 51 und einem entsprechenden Rigipsprofil 49 eingebaut sein. Die weiteren Bauwerkskörper können beispielsweise eine Estrichhöhe von 70 Millimetern aufweisen. Der Bodenaufbau kann durch die Höhenverstellung des Trägers 1, des Einlaufstücks 35 und der Schiene 45' an die entsprechenden baulichen Gegebenheiten angepasst werden.

Figur 3C zeigt eine weitere Ausführungsform des erfindungsgemäßen Bodenaufbaus mit einem Träger 1 und einem Ablaufbauteil 21, der direkt in den umliegenden oder umfassenden Bauwerkskörper 57 eingefasst ist. Der Träger 1 und das Ablaufbauteil 21 können Merkmale der entsprechenden in Figur 3A gezeigten Komponenten umfassen. In der in Figur 3C dargestellten Ausführungsform kann beispielsweise eine Glastrennwand 59 (oder ein anderer bündiger Wandaufbau) vorgesehen sein, um die sanitäre Einrichtung von dem umliegenden Raum zu trennen.

In einem ersten Schritt kann das Ablaufbauteil 21 an den Bauwerkskörper 57 angeordnet und/oder mit diesen verbunden werden. Der Träger 1 kann auf eine gewünschte Höhe eingestellt werden. Das Einlaufstück 35 kann an die Höhe eines Bodenbelags des Bauwerkskörpers 57 angepasst werden, um, wie in Figur 3C dargestellt, einen bündigen Übergang zu erzeugen. Der Belag 53 des Trägers 1 kann über mindestens eine Dichtung D gegenüber dem Ablaufbauteil 21 abgedichtet sein. Ferner kann das Ablaufbauteil 21 über mindestens eine Dichtung D gegenüber dem Bodenbelag des Bauwerkskörpers 57 abgedichtet sein, sodass auch nach einer Höhenverstellung die Dichtheit gewährleistet sein kann. Auch nach Montage des Bodenaufbaus bleibt der Bodenaufbau somit über die Einstellmöglichkeiten des Einlaufstücks 35 und des Trägers 1 an eine nachträglich festgelegte (und beispielsweise geänderte) Dicke des Bodenbelags des Bauwerkskörpers 57 anpassbar, um einen bündigen Einbau oder einen Einbau mit einer gewünschten Höhe zu erreichen.

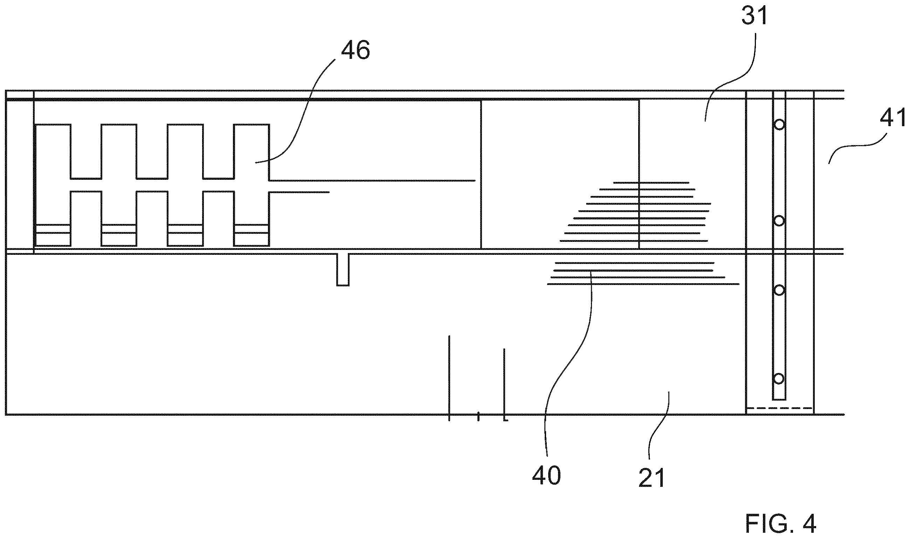

Figur 4 zeigt eine Vorderansicht einer Anordnung eines Bodenaufbaus gemäß einer Ausführungsform der vorliegenden Erfindung. Der Bodenaufbau kann ähnlich zu Figuren 3A und 3B ein Ablaufbauteil 21 und ein Wandeinbauteil 31 aufweisen. Das Wandeinbauteil 31 kann, wie in Figur 3A gezeigt, über Füße 41 an einer Hinterwand oder einem entsprechenden Bauwerkskörper befestigt sein. Das Wandeinbauteil 31 kann auf dem Ablaufbauteil 21 angeordnet sein, wobei die Front des Wandeinbauteils 31 durch eine Blende 40 des Ablaufbauteils 21 zunächst verblendet sein kann, was durch eine die Bruchstellen der Blende 40 zeigende Schraffur schematisch für einen Teilbereich dargestellt ist. Das Wandeinbauteil 31 kann zudem eine Tiefeneinstellung der in Figuren 3A und 3B gezeigten Schienen 45, 45' über Bauteil 46 ermöglichen. Das Bauteil 46 kann ein Block sein, beispielsweise aus Kunststoff oder aus einem geeigneten anderen Material. Das Bauteil 46 kann die in Figur 4 gezeigt zahnartige oder lamellenartige Form aufweisen, welche vor und Rücksprünge aufweist und in einem Bereich eine Aussparung zum Einsetzen der Schiene 45 aufweisen kann. Die Form des Bauteils 46 kann gewählt sein, um eine Stabilität mit einem gleichzeitig geringen Materialaufwand zu gewährleisten.

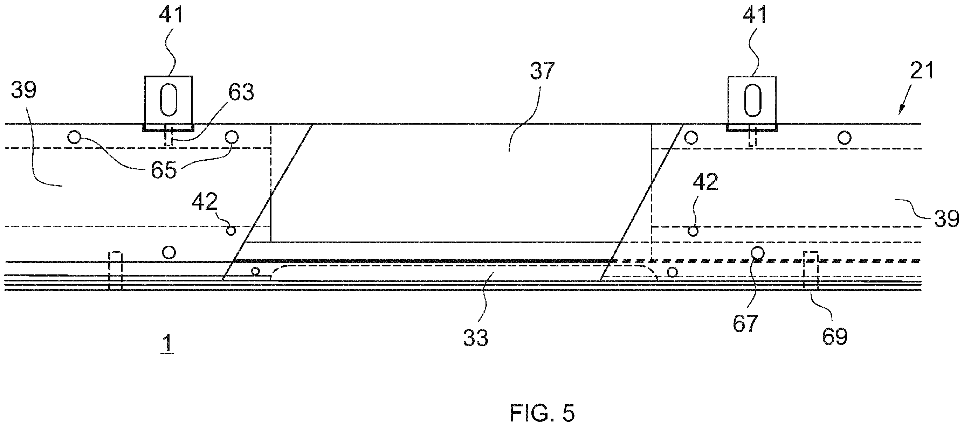

Figur 5 zeigt eine Draufsicht auf einen Bodenaufbau gemäß einer Ausführungsform der vorliegenden Erfindung.

Das Detail zeigt einen Schnitt durch ein Ablaufbauteil 21, wie es beispielsweise in Figuren 3A bis 3C dargestellt ist. Entsprechend kann das Ablaufbauteil 21 entsprechende Komponenten aufweisen. Das Ablaufbauteil 21 kann mit Füßen 41 eines Wandeinbauteils, beispielsweise Wandeinbauteil 31 aus den Figuren 3A und 3B, und/oder anderen Befestigungselementen für einen Bauwerkskörper verbunden sein, beispielsweise über Innengewinde 63. Das Ablaufbauteil 21 kann ferner über eine oder mehrere Steckverbindungen 65 und/oder die in Fig. 3 A gezeigten Innengewinde 40 mit dem Wandeinbauteil verbunden sein. Ferner kann das Ablaufbauteil 21 weitere Innengewinde 67 für die in Figur 3A gezeigten Gewindestäbe 43 aufweisen. Das Ablaufbauteil 21 kann noch weitere Innengewinde 69 für die in Figur 3A gezeigten Befestigungsschrauben 23 umfassen. Das Ablaufbauteil 21 definiert eine Ablauföffnung 33 über die Flüssigkeit von einem angeschlossenen Boden eines Trägers 1 abgeleitet werden kann. Die Flüssigkeit erreicht über die Ablauföffnung 33 einen Geruchsverschluss 37, der, wie in Figur 5 dargestellt, beidseitig Abflussanschlüsse zum Ablauf 39 aufweisen kann.

Der Geruchsverschluss 37 kann über eine Breite des Ablaufbauteils 21 ausgelegt sein. Beispielsweise kann der Geruchsverschluss 73 eine Breite von 250 Millimetern aufweisen und ferner an einen integrierten Abfluss mit einem Durchschnitt von 50 Millimetern angeschlossen sein. Es sollte jedoch verständlich sein, dass auch andere Größen vorgesehen sein können und dass die vorliegende Erfindung nicht auf eine bestimmte Größenangabe beschränkt ist.

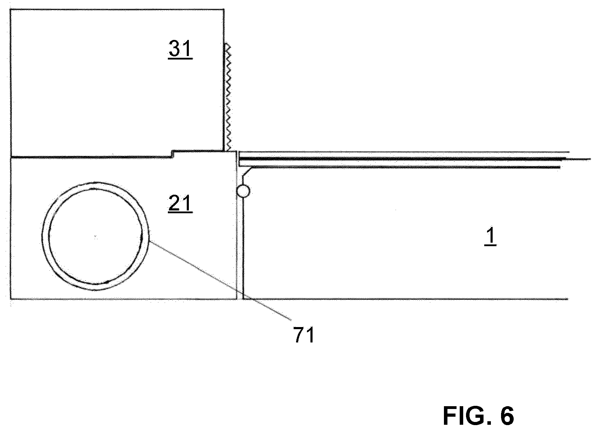

Figur 6 zeigt eine Seitenansicht eines Bodenaufbaus gemäß einer Ausführungsform der vorliegenden Erfindung. Die Seitenansicht zeigt einen höhenverstellbaren Träger 1, ein Ablaufbauteil 21 und (optional) ein Wandeinbauteil 31, welche variabel an bauliche Gegebenheiten, beispielsweise einen Belag des Trägers 1, eine Ausgestaltung von umliegenden Bauwerkskörpern und dergleichen auch nach Einbau des Bodenaufbaus einstellbar sind. Figur 6 zeigt ferner einen Schnitt durch ein integriertes Abflussrohr 71 im Ablaufbauteil 21.

In einer bevorzugten Ausführungsform kann ein Bodenaufbau gemäß den in den Figuren 1 bis 6 gezeigten und weiteren Ausführungsformen wie folgt montiert oder errichtet werden.

Zunächst kann ein Rohbau mit einem Unterbau für eine sanitäre Einrichtung und gegebenenfalls mit umliegenden Bauwerkskörpern bereitgestellt sein. In einem weiteren Arbeitsschritt, kann ein Ablaufbauteil des Bodenaufbaus eingebaut und am jeweiligen Ablauf fixiert werden. Ferner kann ein Träger des Bodenaufbaus am Ablaufbauteil fixiert und ausgerichtet werden. Der Träger kann über verstellbare Fußelemente ausgerichtet werden. Hierdurch kann der Träger eine gewünschte Neigung zum Ablaufbauteil aufweisen und das Ablaufbauteil kann in Waage montiert werden.

Nach erfolgtem Einbau und nachdem die baulichen Gegebenheiten der umliegenden Bauwerkskörper, beispielsweise eine Dicke eines Bodenbelags und dergleichen, festliegen, kann der Träger in Höhe ausgerichtet werden und/oder eine entsprechende Ablauföffnung des Ablaufbauteils kann an die Höhe des Trägers (und eines entsprechenden Bodenbelags) angepasst werden.

Der erfindungsgemäße Bodenaufbau kann somit besonders flexibel an bauliche Gegebenheiten angepasst werden und ist besonders einfach zu verbauen.

### BEZUGSZEICHENLISTE

- 1: Träger
- 3: Oberseite
- 5: Unterseite
- 7: Seite des Trägers
- 8: Dichtung
- 9: Unterbau
- 11: Fußelement
- 13: Öffnung
- 15: Steckteil
- 17: Schnitt
- 19: Nuten
- 21: Ablaufbauteil
- 23: Schrauben
- 23': Langlöcher
- 25: Öffnung im Fußelement
- 27: Verlängerungsstab
- 29: Blockierstab
- 31: Wandeinbauteil
- 32: verfliesbare Oberfläche
- 33: Ablauföffnung
- 35: Einlaufstück
- 37: Geruchsverschluss
- 39: Ablauf
- 40, 40': Blende
- 41: Fuß
- 42: Innengewinde
- 43: Gewindestäbe
- 45, 45': Schiene
- 46: verschiebbares Bauteil
- 47: Platte
- 49: Rigipsprofil
- 51: Rigipsplatte
- 53: Belag
- 55: Wandbelag
- 57: Bauwerkskörper
- 59: Glastrennwand
- 63: Innengewinde
- 65: Steckverbindung
- 67: Innengewinde für Gewindestäbe
- 69: Innengewinde für Befestigungsschrauben
- 71: Abflussrohr

## Patentansprüche

1. Bodenaufbau für sanitäre Einrichtungen, der Folgendes umfasst:
einen Träger (1) mit einer Oberseite (3), die zumindest abschnittsweise eine zu einer Seite (7) des Trägers abfallende Neigung aufweist, und einer Unterseite (5), die im Wesentlichen parallel zu einem Unterbau (9) einer sanitären Einrichtung angeordnet sein kann; und
eine Vielzahl von Fußelementen (11), die mit dem Träger (1) derart verbindbar sind, dass jedes Fußelement (11) den Träger (1) mit einem Abstand zum Unterbau (9) stützt, wobei der Abstand im Wesentlichen einer Höhe des jeweiligen Fußelements (11) entspricht, wobei die Höhe der Fußelemente (11) individuell einstellbar ist,
**dadurch gekennzeichnet, dass** der Träger (1) eine Vielzahl von Öffnungen (13) zwischen der Oberseite (3) und der Unterseite (5) aufweist und die Fußelemente (11) derart mit dem Träger (1) verbindbar und mit oder in mindestens einer aus der Vielzahl von Öffnungen (13) verschraubbar sind, dass die Höhe der Fußelemente (11) durch die Öffnungen (13) einstellbar ist, und
wobei der Träger (1) ferner eine Vielzahl von Aussparungen aufweist, in die ein Steckteil (15) mit einer Hilfsöffnung (13') einsetzbar ist, wobei die Hilfsöffnung (13') in ihrer Form den Öffnungen (13) des Trägers entspricht, sodass Fußelemente (11) auch in die Hilfsöffnung (13') des Steckteils einsetzbar sind und den Träger (1) stützen.

2. Bodenaufbau nach Anspruch 1, der ferner ein Ablaufbauteil (21) mit einer Ablauföffnung (33) umfasst, wobei das Ablaufbauteil (21) zumindest abschnittsweise form- und/oder kraftschlüssig mit mindestens einer Seite (7) des Trägers (1) derart verbindbar ist, dass die Neigung der Oberseite (3) in Richtung der Ablauföffnung (33) verläuft.

3. Bodenaufbau nach Anspruch 2, wobei das Ablaufbauteil (21) einen Geruchsverschluss (37) umfasst, der mit der Ablauföffnung (33) durch ein Einlaufstück (35) verbunden ist.

4. Bodenaufbau nach Anspruch 3, wobei das Einlaufstück (35) in einer zur Oberseite (3) des Trägers (1) im Wesentlichen senkrechten Richtung verstellbar ist, derart, dass das Einlaufstück (35) die Oberseite (3) des Trägers (1) mit einem Abstand überragt.

5. Bodenaufbau nach einem der vorhergehenden Ansprüche 2 bis 4, der ferner ein Befestigungsbauteil (31) zum Einbau in eine Wand umfasst, das zumindest abschnittsweise form- und/oder kraftschlüssig mit dem Ablaufbauteil (21) verbindbar ist und eine Schiene (45, 45') aufweist, die in eine zur Oberseite (3) des Trägers (1) im Wesentlichen parallele Richtung verstellbar ist.

6. Bodenaufbau nach einem der vorhergehenden Ansprüche, wobei die Öffnungen (11) gemäß einer Struktur, insbesondere einer gitterartigen, wabenförmigen, kreisförmigen oder spiralartigen Struktur, angeordnet sind.

7. Bodenaufbau nach einem der vorhergehenden Ansprüche, der ferner mindestens eine Bodenplatte zur Auflage auf dem Träger (1) umfasst.

8. Bodenaufbau nach einem der vorhergehenden Ansprüche, wobei der Bodenaufbau verfliesbar oder zur Aufnahme einer Wanne eingerichtet ist oder mit Kunststoff ausgekleidet werden kann.

9. Bodenaufbau nach einem der vorhergehenden Ansprüche, der eine Wanne, insbesondere eine Duschwanne, umfasst.

10. Verfahren zur Errichtung eines Bodenaufbaus für sanitäre Einrichtungen, das folgende Schritte umfasst:
Bereitstellen eines Unterbaus für eine sanitäre Einrichtung;
Einbauen eines Trägers mit einer Oberseite, die zumindest abschnittsweise eine zu einer Seite des Trägers abfallende Neigung aufweist, und einer Unterseite im Wesentlichen parallel zum Unterbau;
Verbinden einer Vielzahl von Fußelementen mit dem Träger derart, dass jedes Fußelement den Träger mit einem Abstand zum Unterbau stützt, wobei der Abstand im Wesentlichen einer Höhe des jeweiligen Fußelements entspricht; und
Einstellen der Höhe von mindestens einem der Fußelemente nach Einbau des Trägers
wobei der Träger eine Vielzahl von Öffnungen zwischen der Oberseite und der Unterseite aufweist und die Fußelemente derart mit dem Träger verbindbar und mit oder in mindestens einer aus der Vielzahl von Öffnungen verschraubbar sind, dass die Höhe der Fußelemente durch die Öffnungen einstellbar ist, und wobei der Träger ferner eine Vielzahl von Aussparungen aufweist, in die ein Steckteil mit einer Hilfsöffnung einsetzbar ist, wobei die Hilfsöffnung in ihrer Form den Öffnungen des Trägers entspricht, sodass Fußelemente auch in die Hilfsöffnung des Steckteils einsetzbar sind und den Träger stützen.

11. Verfahren nach Anspruch 10, das ferner ein Einbauen eines Ablaufbauteils mit einer Ablauföffnung umfasst, derart, dass das Ablaufbauteil zumindest abschnittsweise form- und/oder kraftschlüssig mit mindestens einer Seite des Trägers derart verbunden ist, dass die Neigung der Oberseite in Richtung der Ablauföffnung verläuft, wobei das Einstellen der Höhe auch nach dem Einbau des Ablaufbauteils erfolgen kann.

## Claims

1. A floor structure for sanitary installations, comprising the following:
a support (1) having an upper side (3), which has at least in sections an inclination sloping down to a side (7) of the support, and a lower side (5), which can be arranged substantially parallel to a substructure (9) of a sanitary installation; and
a plurality of foot elements (11), which can be connected to the support (1) in such a way that each foot element (11) supports the support (1) at a distance from the substructure (9), wherein the distance substantially corresponds to a height of the respective foot element (11), wherein the height of the foot elements (11) is individually adjustable,
**characterised in that** the support (1) has a plurality of openings (13) between the upper side (3) and the lower side (5) and the foot elements (11) are connectable to the support (1) and screwable to or into at least one of the plurality of openings (13) in such a way that the height of the foot elements (11) is adjustable through the openings (13), and
wherein the support (1) further has a plurality of recesses, into which a plug-in part (15) with an auxiliary opening (13') is insertable, wherein the auxiliary opening (13') corresponds in its shape to the openings (13) of the support, so that foot elements (11) are also insertable into the auxiliary opening (13') of the plug-in part and support the support (1).

2. The floor structure according to claim 1, further comprising a drain component (21) with a drain opening (33), wherein the drain component (21) is connectable at least in sections in a form-fitting and/or force-fitting manner to at least one side (7) of the support (1) such that the inclination of the upper side (3) runs in the direction of the drain opening (33).

3. The floor structure according to claim 2, wherein the drain component (21) comprises an odor trap (37) which is connected to the drain opening (33) by an inlet piece (35).

4. The floor structure according to claim 3, wherein the inlet piece (35) is adjustable in a direction substantially perpendicular to the upper side (3) of the support (1) such that the inlet piece (35) projects beyond the upper side (3) of the support (1) at a distance.

5. The floor structure according to any one of the preceding claims 2 to 4, further comprising a fastening component (31) for installation in a wall, which is connectable at least in sections in a form-fitting and/or force-fitting manner to the drain component (21) and has a rail (45, 45') which is adjustable in a direction substantially parallel to the upper side (3) of the support (1).

6. The floor structure according to any one of the preceding claims, wherein the openings (11) are arranged according to a structure, in particular a grid-like, honeycomb-like, circular or spiral-like structure.

7. The floor structure according to any one of the preceding claims, further comprising at least one floor plate for resting on the support (1).

8. The floor structure according to any one of the preceding claims, wherein the floor structure is adapted to be tiled or to receive a tub or can be lined with plastic.

9. The floor structure according to any one of the preceding claims, comprising a tub, in particular a shower tub.

10. A method for constructing a floor structure for sanitary installations, comprising the following steps:
providing a substructure for a sanitary installation;
installing a support having an upper side, which has at least in sections an inclination sloping down to a side of the support, and a lower side substantially parallel to the substructure;
connecting a plurality of foot elements to the support in such a way that each foot element supports the support at a distance from the substructure, wherein the distance substantially corresponds to a height of the respective foot element; and
adjusting the height of at least one of the foot elements after installation of the support
wherein the support has a plurality of openings between the upper side and the lower side and the foot elements are connectable to the support and screwable to or into at least one of the plurality of openings in such a way that the height of the foot elements is adjustable through the openings, and
wherein the support further has a plurality of recesses, into which a plug-in part with an auxiliary opening is insertable, wherein the auxiliary opening corresponds in its shape to the openings of the support, so that foot elements are also insertable into the auxiliary opening of the plug-in part and support the support.

11. The method according to claim 10, further comprising installing a drain component with a drain opening in such a way that the drain component is connected at least in sections in a form-fitting and/or force-fitting manner to at least one side of the support such that the inclination of the upper side runs in the direction of the drain opening, wherein the height can also be adjusted after installation of the drain component.

## Revendications

1. Structure de sol pour installations sanitaires, comprenant :
un support (1) avec un côté supérieur (3), qui présente au moins en partie une inclinaison descendante vers un côté (7) du support, et un côté inférieur (5), qui peut être disposé sensiblement parallèlement à une sous-structure (9) d'une installation sanitaire ; et
une pluralité d'éléments de pied (11), qui peuvent être reliés au support (1) de telle sorte que chaque élément de pied (11) soutient le support (1) à une distance de la sous-structure (9), la distance correspondant sensiblement à une hauteur de l'élément de pied (11) respectif, la hauteur des éléments de pied (11) étant réglable individuellement,
**caractérisée en ce que** le support (1) présente une pluralité d'ouvertures (13) entre le côté supérieur (3) et le côté inférieur (5) et les éléments de pied (11) peuvent être fixés au support (1) et vissés avec ou dans au moins une de la pluralité d'ouvertures (13) de telle sorte que la hauteur des éléments de pied (11) est réglable à travers les ouvertures (13), et
dans laquelle le support (1) présente en outre une pluralité d'évidements, dans lesquels une partie enfichable (15) avec une ouverture auxiliaire (13') peut être insérée, l'ouverture auxiliaire (13') correspondant dans sa forme aux ouvertures (13) du support, de sorte que des éléments de pied (11) peuvent également être insérés dans l'ouverture auxiliaire (13') de la partie enfichable et soutiennent le support (1).

2. Structure de sol selon la revendication 1, comprenant en outre un composant d'écoulement (21) avec une ouverture d'écoulement (33), dans laquelle le composant d'écoulement (21) peut être fixé au moins en partie par complémentarité de forme et/ou de force à au moins un côté (7) du support (1) de telle sorte que l'inclinaison du côté supérieur (3) s'étende en direction de l'ouverture d'écoulement (33).

3. Structure de sol selon la revendication 2, dans laquelle le composant d'écoulement (21) comprend un siphon (37) qui est relié à l'ouverture d'écoulement (33) par une pièce d'entrée (35).

4. Structure de sol selon la revendication 3, dans laquelle la pièce d'entrée (35) est réglable dans une direction sensiblement perpendiculaire au côté supérieur (3) du support (1) de telle sorte que la pièce d'entrée (35) dépasse du côté supérieur (3) du support (1) d'une certaine distance.

5. Structure de sol selon l'une quelconque des revendications précédentes 2 à 4, comprenant en outre un composant de fixation (31) pour l'installation dans une paroi, qui peut être fixé au moins en partie par complémentarité de forme et/ou de force au composant d'écoulement (21) et présente un rail (45, 45') qui est réglable dans une direction sensiblement parallèle au côté supérieur (3) du support (1).

6. Structure de sol selon l'une quelconque des revendications précédentes, dans laquelle les ouvertures (11) sont disposées selon une structure, en particulier une structure de type grille, en nid d'abeilles, circulaire ou en spirale.

7. Structure de sol selon l'une quelconque des revendications précédentes, comprenant en outre au moins une dalle de sol pour l'appui sur le support (1).

8. Structure de sol selon l'une quelconque des revendications précédentes, dans laquelle la structure de sol peut être carrelé ou est conçue pour recevoir une baignoire ou peut être revêtue de plastique.

9. Structure de sol selon l'une quelconque des revendications précédentes, comprenant un bac, en particulier un bac de douche.

10. Procédé de construction d'une structure de sol pour installations sanitaires, comprenant les étapes suivantes :
la fourniture d'une sous-structure pour une installation sanitaire ;
l'installation d'un support avec un côté supérieur, qui présente au moins en partie une inclinaison descendante vers un côté du support, et un côté inférieur sensiblement parallèle à la sous-structure ;
la fixation d'une pluralité d'éléments de pied au support de telle sorte que chaque élément de pied soutient le support à une distance de la sous-structure,
la distance correspondant sensiblement à une hauteur de l'élément de pied respectif ; et
le réglage de la hauteur d'au moins un des éléments de pied après l'installation du support
le support présentant une pluralité d'ouvertures entre le côté supérieur et le côté inférieur et les éléments de pied pouvant être fixés au support et vissés avec ou dans au moins une de la pluralité d'ouvertures de telle sorte que la hauteur des éléments de pied est réglable à travers les ouvertures, et
le support présentant en outre une pluralité d'évidements, dans lesquels une partie enfichable avec une ouverture auxiliaire peut être insérée, l'ouverture auxiliaire correspondant dans sa forme aux ouvertures du support, de sorte que des éléments de pied peuvent également être insérés dans l'ouverture auxiliaire de la partie enfichable et soutiennent le support.

11. Procédé selon la revendication 10, comprenant en outre l'installation d'un composant d'écoulement avec une ouverture d'écoulement, de telle sorte que le composant d'écoulement est fixé au moins en partie par complémentarité de forme et/ou de force à au moins un côté du support de telle sorte que l'inclinaison du côté supérieur s'étende en direction de l'ouverture d'écoulement, le réglage de la hauteur pouvant également avoir lieu après l'installation du composant d'écoulement.
